# EUROPÄISCHE PATENTANMELDUNG

(11) **EP 4 786 234 A1**
(43) Veröffentlichungstag der Anmeldung: **05.08.2026**
(21) Anmeldenummer: 25155041.4
(22) Anmeldetag: 30.01.2025
(51) Int. Cl.: B60J 10/84, B60P 3/34, B60R 13/06, B60R 13/07, B60J 10/25

(54) **SLIDE-OUT-ANORDNUNG, DICHTUNGSSYSTEM DAFÜR SOWIE FAHRZEUG MIT EINER SLIDE-OUT-ANORDNUNG**

(71) Anmelder: XKuub B.V., 2153 GE Nieuw-Vennep (NL)
(72) Erfinder: Blom, Petrus Hendricus Maria, 2153GE Nieuw-Vennep (NL); Helmling, Markus, 89160 Dornstadt (DE)
(74) Vertreter: Witte, Weller und Partner Patentanwälte mbB Stuttgart

(57) **Zusammenfassung**

Bekannt sind Dichtungssystem (40) für eine Slide-Out-Anordnung (10) eines Wohnmobils (100) oder Caravan-Anhängers (102) zur Abdichtung eines in einer Slide-Out-Aussparung zwischen einer eingefahrenen Stau-Endlage und einer ausgefahrenen Nutz-Endlage verfahrbaren Slide-Out-Kastens (12).

Zu Verbesserung der Dichtigkeit solcher Dichtungssysteme wird die folgende Bauweise vorgeschlagen: Das Dichtungssystem (40) umfasst eine chassisseitige eine Slide-Out-Aussparung umgebende Dichteinrichtung (44) zur chassisseitigen Anbringung am Fahrzeug, die mit Seitenwandungen (14) sowie einer Bodenwandung (16) und einer Dachwandung (18) des Slide-Out-Kastens (12) als Gegenfläche abdichtet. Diese chassisseitige Dichteinrichtung (44) weist einen umlaufend an einer Slide-Out-Aussparung des Chassis vorgesehenen Dichtungsträger (50) auf, der zwei hintereinanderliegende und die Slide-Out-Aussparung umgebende elastische Dichtungen (70, 72) trägt. Der Dichtungsträger (50) weist zwischen derersten Dichtung (70) und derzweiten Dichtung (72) einen Drainagekanal (64) auf, der mit mindestens einer Drainageöffnung (68) an einer Außenseite des Chassis verbunden ist.

## Beschreibung

Die Erfindung betrifft das Gebiet von Slide-Out-Kästen für Fahrzeuge. Slide-Out-Kästen sind Erweiterungen für den Innenraum eines Fahrzeugs, die in einer Slide-Out-Aussparung einer Fahrzeugwand positioniert sind und zwischen einer eingefahrenen Stau-Endlage und einer ausgefahrenen Nutz-Endlage verfahrbar sind. Die ausgefahrene Nutz-Endlage führt dazu, dass der Innenraum des Fahrzeugs in etwa um die Größe des Slide-Out-Kastens vergrößert ist. Dies kann beispielsweise bei stationärer Verwendung des Fahrzeugs genutzt werden, um den Wohnraum eines Reisemobils zu vergrößern.

Eine Problematik bei Slide-Out-Anordnungen, umfassend den Slide-Out-Kasten und dessen Verfahrsystem, ist die Abdichtung zwischen der fahrzeugfesten Wandung des Aufbaus und dem demgegenüber verfahrbaren Slide-Out-Kasten. Ist diese Abdichtung unzureichend, so kann Feuchtigkeit eindringen und Schäden verursachen. Auch kann im Bereich der Dichtung Wärme entweichen.

Bekannt sind aus dem Bereich der Slide-Out-Anordnungen Endlagendichtungen, die in der eingefahrenen Stau-Endlage des Slide-Out-Kastens einen Spalt zwischen einer Außenwandung des Slide-Out-Kastens und der Seitenwand des Fahrzeugs dicht verschließen. Bekannt sind weiterhin, beispielsweise aus der IT UB20155826 A1, Dichtungen, die dauerhaft außen am Slide-Out-Kasten anliegen. Das genannte Dokument IT UB20155826 A1 schlägt eine Gestaltung mit einer Dichtung mit mehreren Dichtbereichen vor, die gemeinschaftlich das Eindringen von Feuchtigkeit vermeiden sollen.

Die bekannten Dichtungssysteme sind jedoch bezüglich Ihrer Dichtheit noch nicht zufriedenstellend, auch bedingt durch Belastung der Führung im Betrieb und nicht exakt gleichbleibender Relativlage zwischen dem Slide-Out-Kasten und einer umgebenden Dichtung.

### AUFGABE UND LÖSUNG

Aufgabe der Erfindung ist es, ein verbessertes Dichtungssystem für eine Slide-Out-Anordnung zur Verfügung zu stellen, welches zuverlässig im Betrieb und kostengünstig in der Herstellung ist.

Zur Lösung dieser Aufgabe werden eine Slide-Out-Anordnung für ein Wohnmobil oder einen Caravan-Anhänger sowie ein Dichtungssystem hierfür vorgeschlagen, um die Abdichtung zwischen einer eingefahrenen Stau-Endlage und einer ausgefahrenen Nutz-Endlage des verfahrbaren Slide-Out-Kastens sicherzustellen.

Das betreffende Dichtungssystem umfasst eine chassisseitige Dichteinrichtung, die im montierten Zustand die Slide-Out-Aussparung nach innen weisend umgibt und mit den Seitenwandungen, der Bodenwandung sowie der Dachwandung des Slide-Out-Kastens als Gegenflächen abdichtet.

Die Slide-Out-Anordnung besteht aus einem zwischen einer eingefahrenen Stau-Endlage und einer ausgefahrenen Nutz-Endlage verfahrbaren Slide-Out-Kasten, der für die Verwendung an einem Wohnmobil oder Caravan-Anhänger vorgesehen ist, sowie aus einem Dichtungssystem der nachfolgend beschriebenen Art. In den Slide-Out-Kasten kann in bekannter Art beispielsweise Küchenmobiliar oder Sitz- oder Liegegelegenheiten eingebaut sein.

Die chassisseitige Dichteinrichtung des Dichtungssystems weist einen vorzugsweise umlaufenden Dichtungsträger an der Slide-Out-Aussparung des Chassis auf, der vorzugsweise in Art eines Profils hergestellt ist. Dieses Profil kann umlaufend einteilig gefertigt sein oder aus mehreren der Länge nach aufeinander folgenden Abschnitten zusammengesetzt werden. Insbesondere vorzugsweise ist ein einteiliger Profilabschnitt vorgesehen, der zumindest einen horizontalen unteren Teilabschnitt und zwei sich nach oben erstreckende Teilabschnitte umfasst.

Der Zweck des Dichtungsträgers besteht primär darin, Dichtungen aus elastischem Material zu tragen, vorliegend zwei hintereinanderliegende elastische Dichtungen: eine erste außenliegende Dichtung und eine zweite innenliegende Dichtung. Die Dichtungen können insbesondere aus UVbeständigem Elastomer, wie EPDM oder NBR, gefertigt sein.

Die beiden Dichtungen liegen hintereinander versetzt an den Wandungen des Slide-Out-Kastens an. Der Abstand der Dichtungen beträgt vorzugsweise mehr als 15 mm, insbesondere etwa 20 mm. Beide Dichtungen sind jeweils am Dichtungsträger befestigt, insbesondere mittels eines Halteabschnitts, der eine an das Profil des Dichtungsträgers angepasste Formgebung aufweist und in eine korrespondierende Haltenut des Profils eingreift. Alternativ könnten die Dichtungen auch stoffschlüssig am Dichtungsträger angebracht sein.

Bei den Dichtungen kann es sich im einfachsten Fall um Lippendichtungen handeln, die mit einer dünnwandigen Dichtlippe am Slide-Out-Kasten anliegen. Bevorzugt werden jedoch Schlauchdichtungen, wie im Weiteren noch beschrieben wird.

Zwischen den beiden Dichtungen ist ein Drainagekanal vorgesehen, der zumindest teilweise durch eine Oberfläche des Dichtungsträgers begrenzt wird. Insbesondere kann der Drainagekanal in Form einer nutartigen Vertiefung im Dichtungsträger ausgeführt sein.

Das Konzept der zwei Dichtungen und des dazwischenliegenden Drainagekanals hat sich als effektiv erwiesen. Bei starkem Regen, möglicherweise verbunden mit starkem Wind, lässt es sich insbesondere bei stehendem Fahrzeug und ausgefahrenem Slide-Out-Kasten nicht vollständig verhindern, dass Wasser die durch die erste Dichtung gebildete Barriere überwindet. Die erste Dichtung verringert jedoch die Windlast und die Menge des eintretenden Wassers so weit, dass die zweite Dichtung den Durchtritt von Wasser wirksam verhindert. Das Wasser kann sich daher im Zwischenraum zwischen den Dichtungen sammeln.

Um das Wasser von hier zu entfernen, ist der genannte Drainagekanal vorgesehen. Dieser Drainagekanal führt zu mindestens einer Drainageöffnung an einer Außenseite des Fahrzeugs. Das sich im Drainagekanal sammelnde Wasser kann also unmittelbar wieder ablaufen.

Wie bereits erwähnt, ist es bevorzugt, wenn mindestens eine Dichtung, insbesondere beide Dichtungen, als Schlauchdichtungen ausgebildet sind. Unter einer solchen Schlauchdichtung wird eine Dichtung verstanden, die im Querschnitt einen umfänglich geschlossenen Teilabschnitt aufweist, der einen lichten Teilquerschnitt umgibt. Die Schlauchdichtung ist in einem Teilbereich ihres Querschnitts wie ein hohler Schlauch geformt. Die Außenseite dieses Schlauchs liegt zum Zwecke des Abdichtens an einer Gegenfläche an.

Diese Formgebung der Dichtung bewirkt, dass die Dichtung nicht wie eine Dichtungslippe abhängig von der Bewegungsrichtung ausgelenkt wird, sondern im Wesentlichen lagefest bleibt. Die Anpresskraft der Dichtung an die Gegenfläche wird bei einer Schlauchdichtung durch eine Verformung des Querschnitts der Schlauchdichtung in eine breitere und flache Form und die hiergegen wirkende Rückstellkraft verursacht.

Eine solche Verformung bietet eine erheblich verbesserte Dichtwirkung und verringerten Verschleiß. Allerdings erschwert eine solche Schlauchdichtung aufgrund der vergleichsweise hohen Reibung das Einfahren und Ausfahren des Slide-Out-Kastens.

Grundsätzlich besteht die Möglichkeit, die durch eine Schlauchdichtung verursachte Reibung fallweise zu reduzieren, indem im Hohlraum der Schlauchdichtung ein Unterdruck erzeugt wird. Dies geht jedoch mit einem recht hohen Aufwand einher und wird daher nicht bevorzugt.

Im Gegenteil wird es bevorzugt, wenn die Schlauchdichtung umfänglich nicht vollständig geschlossen ist und über mindestens eine Öffnung verfügt, durch die der lichte Teilquerschnitt mit der umgebenden Atmosphäre in kommunizierender Verbindung steht. Insbesondere kann die Schlauchdichtung an zwei Stoßenden offen sein. Durch die Verbindung mit der umgebenden Atmosphäre wird verhindert, dass in der Schlauchdichtung ein Überdruck oder Unterdruck entstehen kann. Dies begünstigt eine gleichbleibende Dichtungswirkung.

Um trotz der vergleichsweise hohen Reibung durch die Schlauchdichtungen den Slide-Out-Kasten bewegen zu können, wird die Verwendung von bürstenlosen Elektromotoren als Teil eines Antriebssystems vorgeschlagen. Dies wird im Weiteren noch erläutert.

Vorzugsweise weist mindestens die erste Dichtung einen asymmetrischen Querschnitt auf. Durch einen solchen asymmetrischen Querschnitt kann das Eindringen von Wasser in den Zwischenraum zwischen den Dichtungen erschwert, der Austritt von Wasser hieraus jedoch begünstigt werden.

Insbesondere kann vorgesehen sein, dass der Querschnitt der Wandung des schlauchförmigen Teilabschnitts der Dichtung an seiner Außenseite ein Federsegment aufweist, das beim Zusammendrücken der Dichtung einfedert. Dieses Federsegment übernimmt bei zusammendrückender Kraftbeaufschlagung der Dichtung den überwiegenden Teil der Verformung.

Vorzugsweise weist die erste Dichtung in ihrem Querschnitt einen Zusatzdichtbereich im Bereich des Dichtungsschlauchs auf, der bei ausreichender Kraftbeaufschlagung durch eine Gegenfläche des Slide-Out-Kastens gegen eine Anlagefläche des Dichtungsträgers gedrückt wird. Insbesondere kann dieser Zusatzdichtbereich sich an das oben beschriebene Federsegment anschließen oder hiervon gebildet sein.

Dies bedeutet, dass ein auch vom Federsegment gebildeter Spalt an der Außenseite der ersten Dichtung, der zur Erzielung des gewünschten Verformungsverhaltens von Vorteil ist, phasenweise geschlossen wird, indem der Zusatzdichtbereich an den Dichtungsträger gedrückt wird. Insbesondere ist bevorzugt, wenn dies während der Fahrt und somit bei eingefahrenem Slide-Out-Kasten der Fall ist. Vorzugsweise drückt die Gegenfläche am Slide-Out-Kasten den Zusatzdichtbereich nur bei eingefahrenem Slide-Out-Kasten gegen die Anlagefläche. Eine mögliche Ausgestaltung zur Erzielung dessen wird im Weiteren noch erläutert.

Wie eingangs bereits erwähnt, ist der Dichtungsträger vorzugsweise als Profil ausgebildet und weist daher einen im Wesentlichen einheitlichen Querschnitt auf, der nur stellenweise durch Bohrungen, Einfräsungen oder dergleichen modifiziert ist.

Der Dichtungsträger kann als Kunststoffprofil oder als Metallprofil, insbesondere als Aluminiumprofil, gestaltet sein. Ein Kunststoffprofil bietet Vorteile hinsichtlich des Gewichts und insbesondere der thermischen Isolationswirkung, während ein Metallprofil eine höhere Beständigkeit aufweist und eine hochwertigere Anmutung vermittelt.

Insbesondere bevorzugt ist es, wenn das Profil als Verbundprofil aus Kunststoff und Metall ausgebildet ist. Der Querschnitt des Verbundprofils weist in einem solchen Fall mindestens einen Teilbereich aus Kunststoff und mindestens einen Teilbereich aus Metall auf, insbesondere aus Aluminium. Insbesondere kann das Verbundprofil mehrere Teilbereiche aus Metall aufweisen, die durch einen Teilbereich aus Kunststoff miteinander verbunden sind. Diese Zweiteilung oder Dreiteilung des Profils in unterschiedliche Teilbereiche ist vorzugsweise über die gesamte umlaufende Länge des Dichtungsträgers gegeben. Ein Verbundprofil der beschriebenen Art mit fest verbundenen Teilbereichen, die gemeinsam den Querschnitt bilden, wird im Sinne der Erfindung als einteiliges Profil verstanden.

Die Verwendung eines Verbundprofils erlaubt es, die Vorteile von Metall und Kunststoff zu kombinieren. So können insbesondere von außen sichtbare Teile des Verbundprofils und/oder mechanisch besonders belastete Teilbereiche aus Metall gefertigt sein, während andere Teilbereiche aus Kunststoff bestehen, insbesondere zur Bildung eines thermischen Isolators.

Besonders vorteilhaft ist eine Gestaltung, bei der das Profil im Bereich der ersten äußeren Dichtung aus Kunststoff gefertigt ist, sodass die erste Dichtung durch einen aus Kunststoff gebildeten Profilbereich gehalten wird. An diesen Kunststoffteilbereich schließen sich vorzugsweise außen- und innenseitig Teilbereiche aus Metall an.

Der Kunststoffteilbereich ist vorzugsweise derart angeordnet, dass er in einer nachfolgend beschriebenen Situation von einer 10°C-Isothermen gekreuzt wird. Die 10°C-Isotherme ist jener Bereich der Fahrzeugwand einschließlich der durch den Slide-Out-Kasten gebildeten Fahrzeugwand, in dem sich eine Temperatur von 10°C einstellt, wenn die Temperatur im Innenraum des Fahrzeugs 20°C und die Umgebungstemperatur -5° beträgt. Durch die Anordnung der Kunststoffteilbereichs im Bereich dieser Isothermen wird erreicht, dass der genannte innenseitige Teilbereich aus Metall nicht unter 10°C abkühlt und dadurch Kondensation hier vermieden wird.

Hinsichtlich der Struktur des genannten Verbundprofiles ist es bevorzugt, wenn die Teilbereiche aus Metall und Kunststoff formschlüssig miteinander verbunden sind. Hierunter ist zu verstehen, dass eine Kontaktfläche zwischen Metall und Kunststoff eine Hinterschneidungsgeometrie bildet, beispielsweise in Form einer Schwalbenschwanz-Struktur. Dies führt zu einer festen Verbindung, die insbesondere dann vorteilhaft ist, wenn das den Dichtungsträger bildende Profil in Eckbereichen umgebogen wird. Der Formschluss verhindert, dass der Verbund sich während des Biegens trennt.

Zusätzlich kann vorgesehen sein, dass die Teilbereiche miteinander verklebt sind. Eine solche Verklebung ist insbesondere dann zweckmäßig, wenn die Kontaktfläche zwischen Metall und Kunststoff an bestimmungsgemäß feuchten Stellen vorgesehen ist. Insbesondere, wenn das den Dichtungsträger bildende Profil in Eckbereichen umgebogen wird, kann sich hier zwischen dem metallischen Teilbereich und dem Teilbereich aus Kunststoff im Zuge des Biegens ein schmaler Spalt auftun, in den Wasser eindringen könnte. Dies kann durch eine Verklebung verhindert werden.

Besonders bevorzugt ist es, wenn ein Klebstoff verwendet wird, der nachträglich und insbesondere nach dem Biegen aktiviert wird. So können feine Spalten, die beim Biegen zwischen den Teilbereichen entstehen, mit dem Klebstoff nachträglich verschlossen werden. Besonders geeignete Klebstoffe sind thermisch aktivierbare Klebstoffe wie Epoxidharz-Klebstoffe, EVA-Schmelzklebstoffe oder Phenolharz-Klebstoffe.

Die Dichtungen umgeben die Slide-Out-Aussparung weitgehend vollständig, wenngleich vorgesehen sein kann, dass in einem kurzen Teilabschnitt, insbesondere im Bereich der Bodenwandung des Slide-Out-Kastens, ein kleiner Abstand zwischen einander gegenüberliegenden Enden der ansonsten umlaufenden Dichtung verbleibt. Die Dichtungen können jeweils einstückig oder mehrstückig ausgebildet sein. Bei einer mehrstückigen Gestaltung umfasst mindestens eine der Dichtungen mehrere Abschnitte, die in den Eckbereichen zusammenvulkanisiert sein können. Alternativ ist eine Gestaltung möglich, bei der mindestens eine der Dichtungen einen einstückigen Profilabschnitt umfasst, der in mindestens einem Eckbereich innenseitig eingeschnitten und um mindestens 70° eingeknickt ist. Insbesondere kann die gesamte erste Dichtung einstückig ausgebildet sein, um in jedem Eckbereich durch einen im Wesentlichen dreieckigen Einschnitt einknickbar zu sein.

Eine besondere Bauweise eines Slide-Out-Kastens sieht vor, dass die Seitenwandungen in einem ausgerundeten Bereich in die Dachwandung und/oder die Bodenwandung übergehen. So ist es auch möglich, die Dachwandung, die Seitenwandungen und die Bodenwandung aus einem einheitlichen Plattenmaterial zu fertigen, das in den Eckbereichen gebogen ist. Diese Bauweise wird im Weiteren noch genauer erläutert.

In einem solchen Fall eines Slide-Out-Kastens mit ausgerundeten Eckbereichen ist es von Vorteil, dass auch der Dichtungsträger und die Dichtungen entsprechend dem Slide-Out-Kasten in den Eckbereichen in Form eines Viertelkreises verlaufen. Dies hat bezüglich der Dichtungen den Vorteil, dass mindestens eine der Dichtungen als einstückiges umlaufendes Dichtungsprofil ausgebildet sein kann, ohne dass es die oben erwähnten Einschnitte braucht. Allerdings führt der gekrümmte Verlauf der Dichtungen im Eckbereich im Falle der Verwendung von Schlauchprofilen ggf. dazu, dass die Höhe der Schlauchprofile in den Eckbereichen etwas geringer ist. Dem kann durch passend angepasste Krümmungsradien entgegengewirkt werden. Vorzugsweise ist der innere Krümmungsradius der Dichtungen nicht geringer als 80 mm, insbesondere vorzugsweise nicht geringer als 100 mm.

Die Dichtungen des erfindungsgemäßen Dichtsystems liegen üblicherweise sowohl im eingefahrenen Zustand als auch im ausgefahrenen Zustand des Slide-Out-Kastens außen an diesem an, um in beiden Zuständen und ggf. vorhandenen Zwischenzuständen die Abdichtung zu gewährleisten.

Bevorzugt ist es allerdings, wenn die Intensität der Abdichtung, insbesondere das Maß der Kompression der Dichtungen, im eingefahrenen Zustand größer als im ausgefahrenen Zustand ist. Dies wird der Tatsache gerecht, dass der eingefahrene Zustand des Slide-Out-Kastens insbesondere auch dann gegeben ist, wenn das Fahrzeug bewegt wird und durch Fahrtwind und die exponierte Fahrzeugposition auf der Straße ein besonders hohes Maß an Wasserabdichtung erforderlich ist.

Zur Erreichung einer besonders intensiven Abdichtung im eingefahrenen Zustand des Slide-Out-Kastens kann vorgesehen sein, dass das Dichtungssystem eine erhabene Dichtfläche an einem distalen Ende der Seitenwandungen, der Bodenwandung und/oder der Dachwandung des Slide-Out-Kastens umfasst. Diese erhabene Dichtfläche steht erhöht gegenüber einem angrenzenden Bereich der Wandung, sodass in der Stau-Endlage mindestens eine der elastischen Dichtungen auf die erhabene Fläche aufläuft und dort stärker komprimiert wird als in der Nutz-Endlage.

Gebildet werden kann die erhabene Dichtfläche durch ein vorzugsweise metallisches Gegenprofil am Slide-Out-Kasten. Insbesondere kann es sich um ein L-Profil handeln, welches im Übergang zwischen den Seitenwandungen sowie Dach- und Bodenwandung einerseits und der Stirnwandung des Slide-Out-Kastens andererseits vorgesehen ist.

Vorzugsweise ist die Dichtfläche mindestens um 1 mm gegenüber den sich proximal anschließenden Bereichen der jeweiligen Wandungen erhaben, vorzugsweise um mindestens 1,5 mm. Die Dichtung wird also um dieses Maß stärker komprimiert. Diese stärkere Komprimierung kann insbesondere auch genutzt werden, um die oben schon beschriebene zusätzliche Abdichtung durch das Anliegen der Dichtfläche der Dichtung an der Anlagefläche des Dichtungsträgers zu erzielen.

Wie eingangs bereits beschrieben, ist zwischen den Dichtungen ein Drainagekanal vorgesehen. Der Drainagekanal muss sich nicht umlaufend um die Slide-Out-Aussparung erstrecken, sondern primär an deren unteren Begrenzung sowie vorzugsweise auch an den seitlichen Begrenzungen der Slide-Out-Aussparung. Die Drainagenut nimmt die Flüssigkeit auf, die die erste Dichtung passieren konnte und von der zweiten Dichtung daran gehindert wird, weiter in das Fahrzeug vorzudringen. Die Drainagenut ist mit einer Drainageöffnung verbunden, durch die das eingedrungene Wasser an einer Außenseite des Fahrzeugs abgeleitet werden kann.

Insbesondere vorteilhaft ist es, wenn die mindestens eine Drainageöffnung als Austrittsöffnung im Dichtungsträger ausgebildet ist. Das bedeutet, dass sowohl der Drainagekanal als auch die Drainageöffnung an einem, ggf. mehrteiligen, Profilbauteil vorgesehen sind. Hierdurch entfällt der zusätzliche Abdichtungsbedarf, der entsteht, wenn die Drainageöffnung nicht direkt am Dichtungsträger vorgesehen ist.

Insbesondere kann vorgesehen sein, dass das den Dichtungsträger bildende Profil an der Außenseite mit mindestens einer Durchbrechung versehen ist, die die Drainageöffnung bildet. Da sich relevante Mengen Wasser üblicherweise insbesondere an einem unteren horizontalen Teilabschnitt des Dichtungsträgers sammeln, ist die mindestens eine Durchbrechung vorzugsweise dort vorgesehen. Insbesondere kann an diesem unteren horizontalen Teilabschnitt eine Mehrzahl von Drainageöffnungen vorgesehen sein, beispielsweise in Form horizontaler Auslassschlitze, die hier insbesondere eingefräst sein können.

Wie oben bereits erläutert, ist vorzugsweise vorgesehen, dass der Dichtungsträger eine Haltenut aufweist, in die ein Halteabschnitt der ersten Dichtung eingreift, um dort insbesondere durch angepasste Formgebung von Haltenut und Halteabschnitt befestigt zu sein.

Vorzugsweise ist vorgesehen, dass eine Fluidverbindung zwischen dem Drainagekanal und der Drainageöffnung durch die Haltenut der ersten Dichtung verläuft. Die Haltenut übernimmt damit eine Doppelfunktion: Sie hält zum einen den Halteabschnitt der ersten Dichtung und dient zum anderen als Verbindungsweg für die Flüssigkeit, die sich im Drainagekanal sammelt und von dort aus zur Drainageöffnung strömt.

Grundsätzlich ist diese Doppelfunktion der Haltenut nicht vorbehaltslos positiv, da die Flüssigkeit sich in der Haltenut sammeln könnte, statt nach außen abgegeben zu werden. Es ist daher auch denkbar, die Fluidverbindung unter Umgehung der Haltenut zu konzipieren. Dies allerdings führt zu einer Erhöhung des Dichtungsträgers, was ein Umbiegen des Dichtungsträgers in den Eckbereichen erschwert. Daher ist insbesondere bei Gestaltungen der Slide-Out-Anordnung und des Dichtungssystems mit ausgerundeten Eckbereichen die oben beschriebene Fluidverbindung durch die Haltenut von Vorteil.

Ebenso wie die Dichtungen kann auch der Dichtungsträger der Länge nach durch ein einziges Profil gebildet sein, gegebenenfalls ein Verbundprofil oben beschriebener Art. Alternativ kann der Dichtungsträger aber auch aus zwei oder mehr Profilabschnitten zusammengesetzt werden.

Die freien Enden des einzigen Profils oder der Profilabschnitte sind vorzugsweise miteinander verbunden, beispielsweise über einen Profilverbinder, der in eine der Haltenuten zur Aufnahme der Halteabschnitte der Dichtungen eingeschoben ist. Auch eine Schweißverbindung ist möglich, insbesondere mittels Laserschweißen.

Die Enden des einteiligen Dichtungsträgers oder die Enden der mehreren den Dichtungsträger bildenden Profilabschnitte können bei einer bevorzugten Variante in einem vertikalen Teilabschnitt der Slide-Out-Aussparung angeordnet sein. Bei einer abweichenden Bauweise sind die Enden des Dichtungsträgers und/oder die Enden der Dichtungen im Bereich mindestens einer Stoßstelle voneinander getrennt, wobei die Stoßstelle des Dichtungsträgers vorzugsweise im Bereich der Bodenwandung vorgesehen sein kann. Diese Stoßstelle mit zwei beabstandeten Enden kann dann eine weitere Funktion übernehmen, indem sie als Führung für eine Führungssicke an der Unterseite des Slide-Out-Kastens dient und somit dazu beiträgt, dass der Slide-Out-Kasten nicht durch Erschütterungen in eine exzentrische Stellung in der Slide-Out-Ausnehmung gelangt.

Die erfindungsgemäße Slide-Out-Anordnung verfügt vorzugsweise über ein elektrisches oder hydraulisches Verfahrsystem, das derart angeordnet ist, dass keine hierzu gehörenden Komponenten auf der Außenseite der Wandungen vorgesehen sind. Der Verzicht auf Antriebskomponenten an der Außenseite der Dachwandung, der Seitenwandungen und der Bodenwandung, insbesondere die Vermeidung von dort platzierten Zahnstangen, verhindert einen schädlichen Kontakt mit den Dichtungen.

Insbesondere bevorzugt ist eine Gestaltung des Verfahrsystems mit Schubketten, die ausgefahren werden, um den Slide-Out-Kasten einzufahren. In diesem Zusammenhang wird auf die Europäische Patentanmeldung 23191540.6 verwiesen, deren Inhalt zur Schubkettengestaltung und den zugehörigen Antrieben hiermit durch explizite Bezugnahme zum Inhalt der vorliegenden Beschreibung gemacht wird.

Vorzugsweise weist das Verfahrsystem mindestens einen elektrischen Antriebsmotor auf, insbesondere vorzugsweise mindestens zwei Antriebsmotoren. Die Bedeutung des Antriebs ist bei Verwendung eines erfindungsgemäßen Dichtungssystems besonders groß, da die zwei Dichtungen, insbesondere die zwei Schlauchdichtungen, zu einer vergleichsweise hohen Reibung führen. Es hat sich gezeigt, dass insbesondere bürstenlose Gleichstrommotoren aufgrund ihrer Leistungsfähigkeit hier besonders geeignet sind. Insbesondere bei einer Gestaltung, bei der die Dichtungen kurz vor Ende der Einfahrbewegung zusätzlich komprimiert werden, wie oben beschrieben ist, sind bürstenlose Gleichstrommotoren von Vorteil, da sich gezeigt hat, dass die exakte Drehmomentregelung es erleichtert, die nötige Kraft bereitzustellen, ohne den Motorzu überlasten. Zusätzlich sorgt die hohe Überlastfähigkeit dafür, dass kurzfristige Spitzenlasten problemlos bewältigt werden können.

Wie primär in Hinblick auf den Dichtungsträger und die Dichtungen bereits genauer beschrieben, sieht eine besondere Bauweise eines Slide-Out-Kastens vor, dass die Eckbereiche zwischen den Seitenwandungen einerseits und der Dachwandung und/oder der Bodenwandung andererseits abgerundet sind.

Vorzugsweise besteht das Material der Wandungen aus einem mehrlagigen Verbundmaterial, insbesondere mit zwei metallischen Schichten, wie Aluminiumschichten, zwischen denen eine Zwischenschicht vorgesehen ist. Alternativ oder ergänzend kann das Material mindestens eine Schicht aus GFK (glasfaserverstärktem Kunststoff) oder CFK (kohlenstofffaserverstärktem Kunststoff) sowie mindestens eine Schicht aus Kunststoff umfassen.

Die beschriebene Dichteinrichtung ist vorzugsweise zum Einbau von außen in eine Fahrzeugaußenwand eines Fahrzeugs ausgebildet. Es ist insbesondere vorgesehen, dass die Dichteinrichtung als Ganzes von außen eingeschoben werden kann, vorzugsweise ohne die Dichteinrichtung hierbei gegenüber der Einbaulage verkippen zu müssen. Die Dichteinrichtung weist entsprechend vorzugsweise keinerlei das Einschieben der Dichteinrichtung von außen blockierende Abschnitte auf. Zur Erzielung einer definierten Einbaulage weist der Dichtungsträger vorzugsweise einen nach außen auskragenden Flansch zur Anlage an einer Außenseite der Fahrzeugaußenwand auf.

Den genannten Flansch nicht mit einbeziehend weist der Dichtungsträger vorzugsweise eine Höhe von nicht mehr als 15 mm auf, vorzugsweise von nicht mehr als 10 mm. Der Drainagekanal ist vorzugsweise vollständig im Dichtungsträger vorgesehen und weist insbesondere eine Tiefe von nicht mehr als 10 mm auf, vorzugsweise von nicht mehr als 8 mm.

Der Drainagekanal ist bezogen auf einen lichten Querschnitt, der durch die Slide-Out-Aussparung in der Fahrzeugwandung definiert ist, vorzugsweise vollständig innerhalb dieser Slide-Out-Aussparung vorgesehen.

Neben dem Dichtungssystem und der Slide-Out-Anordnung betrifft die Erfindung weiterhin ein Fahrzeug, insbesondere in Form eines Wohnmobils oder eines Caravans, mit einer Slide-Out-Anordnung der oben beschriebenen Art. Das Fahrzeug weist einen Fahrzeuginnenraum auf sowie die Slide-Out-Anordnung mit einem Slide-Out-Kasten, der zwischen einer Stau-Endlage, in der die Außenseite des Slide-Out-Kastens im Wesentlichen mit der umgebenden Seitenwandung fluchtet, und einer Nutz-Endlage, in der der Slide-Out-Kasten zur Vergrößerung des Fahrzeuginnenraums nach außen ausgefahren ist, verlagerbar ist.

Diese Konstruktion bietet eine effiziente Möglichkeit, den verfügbaren Innenraum eines Fahrzeugs flexibel zu erweitern, während gleichzeitig durch das Dichtungssystem ein zuverlässiger Schutz vor Wasser und anderen Umwelteinflüssen gewährleistet wird.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A bis 2B zeigen erfindungsgemäße Fahrzeuge mit einer Slide-Out-Anordnung.
Fig. 3 zeigt eine Slide-Out-Anordnungfürsolche Fahrzeuge.
Fig. 4 zeigt einen Slide-Out-Kasten sowie ein Dichtungssystem der Slide-Out-Anordnung.
Fig. 5 zeigt einen Teil des Dichtungssystems in einer geschnittenen Darstellung.
Fig. 6A bis 6C verdeutlichen anhand einer Schnittdarstellung die Gestaltung des Slide-Out-Kastens und einer dazu zusammenwirkenden chassisseitigen Dichteinrichtung.
Fig. 7 verdeutlicht die Funktionsweise des Dichtungssystem zum Zwecke der Abführung eingedrungener Feuchtigkeit.

### DETAILLIERTE BESCHREIBUNG DER AUSFÜHRUNGSBEISPIELE

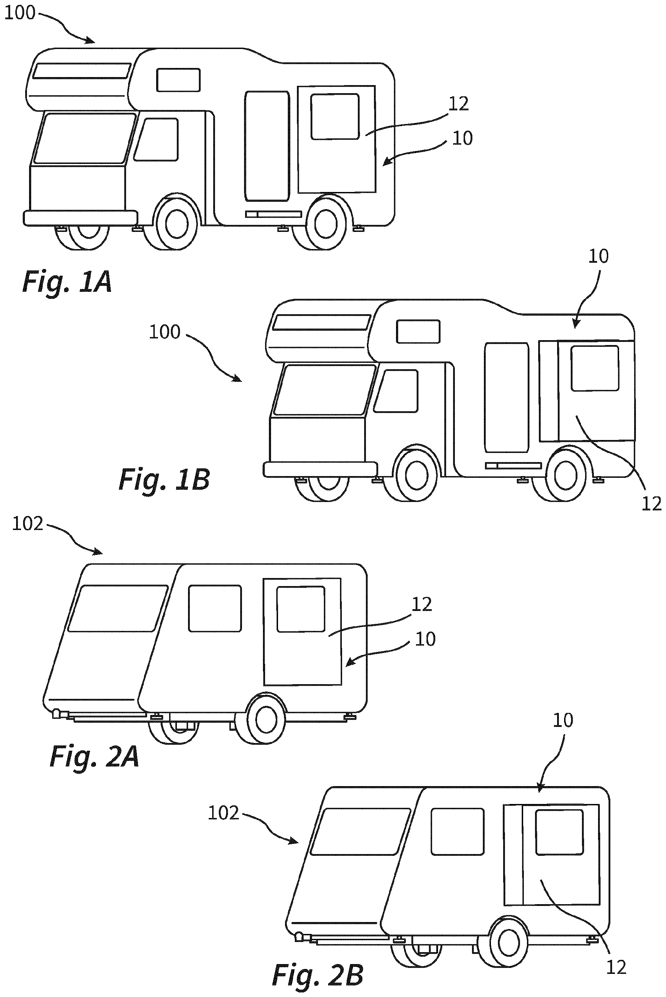

Fig. 1A bis 2B zeigen ein Wohnmobil 100 und einen Caravan-Anhänger 102, die jeweils über eine Slide-Out-Anordnung 10 mit einem ausfahrbaren Slide-Out-Kasten 12 verfügen. Der Slide-Out-Kasten 12 ist im Zustand der Fig. 1B und 2B ausgefahren und führt damit zu einer Vergrößerung des Fahrzeug-Innenraums. Insbesondere kann im Slide-Out-Kasten eine Küchenanordnung oder Sitz- und Liegemobiliar vorgesehen sein.

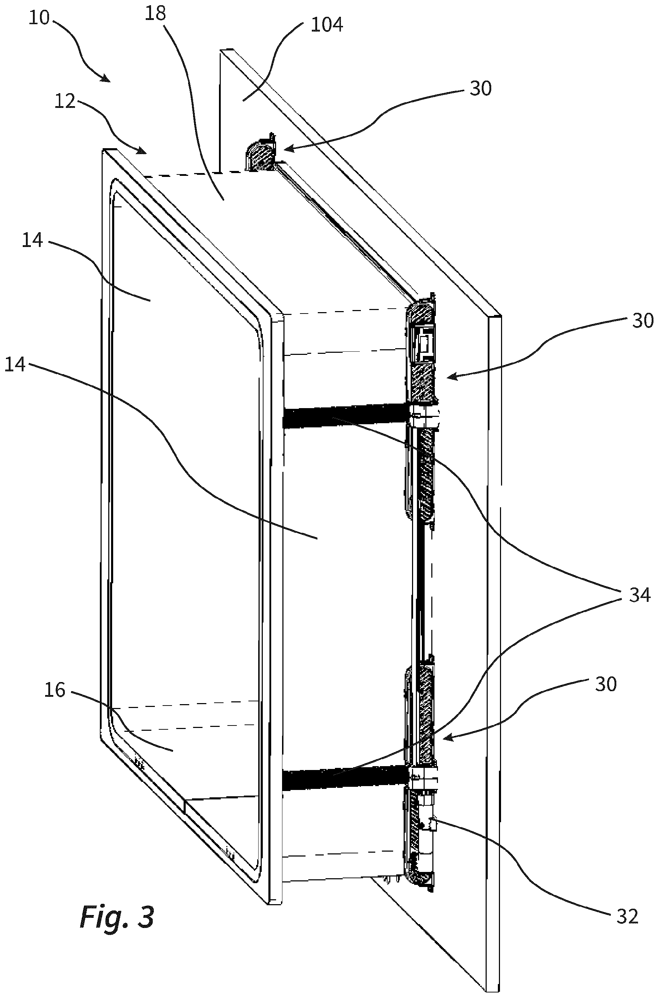

Fig. 3 zeigt eine Slide-Out-Anordnung 10 in separater Darstellung. Die Slide-Out-Anordnung 10 umfasst den ausfahrbaren Slide-Out-Kasten 12 sowie ein Verfahrsystem 30 zur Führung und Verlagerung des Slide-Out-Kastens 12.

Der Slide-Out-Kasten 12 weist neben einer in Fig. 3 nicht unmittelbar sichtbaren Stirnwand 20 eine horizontale Dachwandung 18, eine horizontale Bodenwandung 16 sowie vertikale Seitenwandungen 14 auf. Die Eckbereiche am Übergang zwischen den genannten Wandungen sind ausgerundet gestaltet, mit einem Radius von etwa 10 cm. Die Wandungen sind aus einem mehrlagigen Plattenmaterial hergestellt.

Das Verfahrsystem 30 dient dem Zweck, den Slide-Out-Kasten 12 zwischen einer eingefahrenen Stau-Endlage entsprechend den Fig. 1A und 2A und einer ausgefahrenen Nutz-Endlage entsprechend den Fig. 1B und 2B zu verlagern. Das Verfahrsystem 30 weist in der vorliegenden Gestaltung eine Mehrzahl von Schubketten 34 auf, die durch bürstenlose Gleichstrommotoren 32 angetrieben werden. Die Schubketten 34 können im Kettenspeicher an der Innenseite der Fahrzeugaußenwand 104 eingefahren werden und von hieraus nach innen ausgefahren werden. Sie sind endseitig mit dem Slide-Out-Kasten 12 verbunden, sodass der Slide-Out-Kasten 12 eingefahren wird, wenn die Schubketten 34 ausgefahren werden.

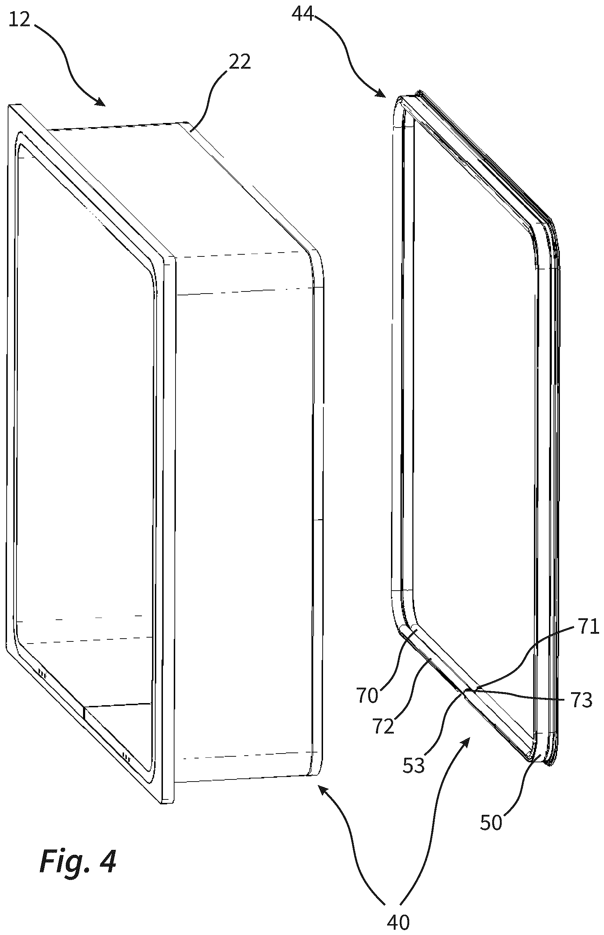

Teil der Slide-Out-Anordnung ist auch ein Dichtungssystem 40, dessen Grundaufbau zunächst anhand von Fig. 4 beschrieben wird. Das Dichtungssystem 40 weist als Hauptkomponente eine Dichteinrichtung 44 auf, die eine Slide-Out-Aussparung umgebend in die Fahrzeugaußenwand 104 eingesetzt ist. Die Dichteinrichtung 44 weist zwei separate Dichtungen 70, 72 in Form von Schlauchdichtungen sowie einen die Dichtungen 70, 72 tragenden Dichtungsträger 50 auf.

Die Dichtungen 70, 72 liegen im montierten Zustand an der Außenseite des Slide-Out-Kastens 12 an. Zur Verbesserung der Dichtwirkung ist am Slide-Out-Kasten 12 ein Gegenprofil 22 vorgesehen, dessen Bedeutung im Weiteren noch näher erklärt wird.

Die Dichtungen 70, 72 sowie der Dichtungsträger 50 sind als umlaufend einteilige Profile vorgesehen. An einem unteren Teilabschnitt sind die jeweiligen Enden 53, 71, 73 dieser Profile vorgesehen. Die dortige Unterbrechung sorgt dafür, dass ein lichter Querschnitt der Schlauchdichtungen belüftet ist und sich somit hier kein Unterdruck oder Überdruck gegenüber der Umgebung einstellen kann. Die Unterbrechung kann weiterhin auch genutzt werden, um hierdurch eine Führung für den Slide-Out-Kasten 12 bereitzustellen. Zu diesem Zweck kann an der Bodenwandung 16 außenseitig eine in die Figuren nicht näher dargetellte Führungssicke vorhanden sein.

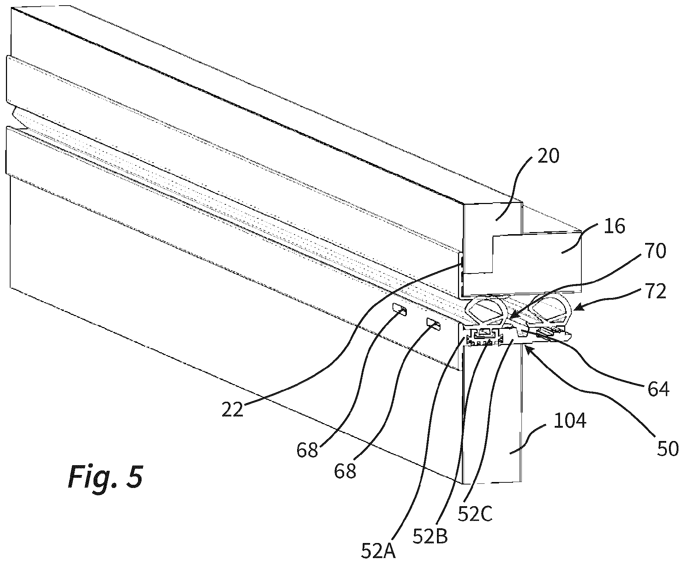

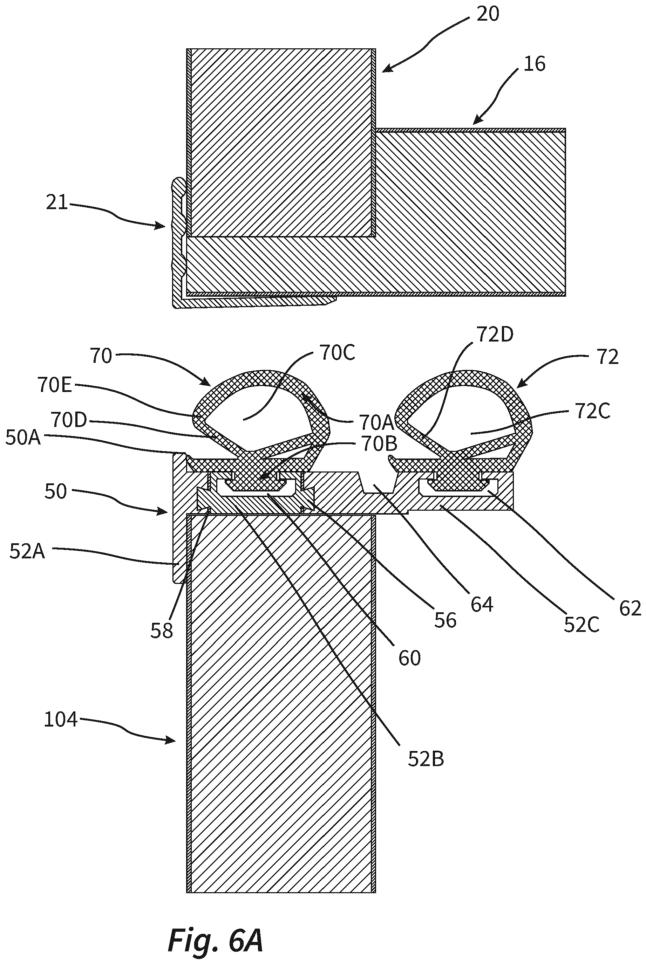

Fig. 5 zeigt in geschnittener Darstellung einen Ausschnitt des Dichtungssystems 40. Fig. 6A zeigt in einer weiteren geschnittenen Darstellung die Dichteinrichtung 44 sowie die Gestaltung einer der Dichteinrichtung 44 gegenüberliegenden Gegenfläche 24 am Slide-Out-Kasten 12, zunächst in getrennter Darstellung, die nicht der Einbausituation entspricht.

Die Dichteinrichtung 44 weist als wesentliche Komponenten den Dichtungsträger 50 sowie die zwei hieran angebrachten Dichtungen 70, 72 auf.

Die erste Dichtung 70 stellt die äußere Dichtung dar. Die zweite Dichtung 72 ist gegenüber der ersten Dichtung 70 zurückgesetzt. Um in einen Fahrzeuginnenraum zu gelangen, muss Feuchtigkeit beide Dichtungen 70, 72 überwinden.

Die beiden Dichtungen sind als Schlauchdichtungen ausgebildet. Dies bedeutet, dass die Dichtungen 70, 72 jeweils einen umfänglich geschlossenen Schlauchabschnitt 70A, 72A aufweisen, der einen lichten Teilquerschnitt 70C, 72C umgibt. Weiterhin weisen die Dichtungen 70, 72 jeweils einen Halteabschnitt 70B, 72B auf, der am Dichtungsträger 50 in eine Haltenut 60, 62 eingesetzt ist und hierdurch im Wesentlichen lagefixiert ist.

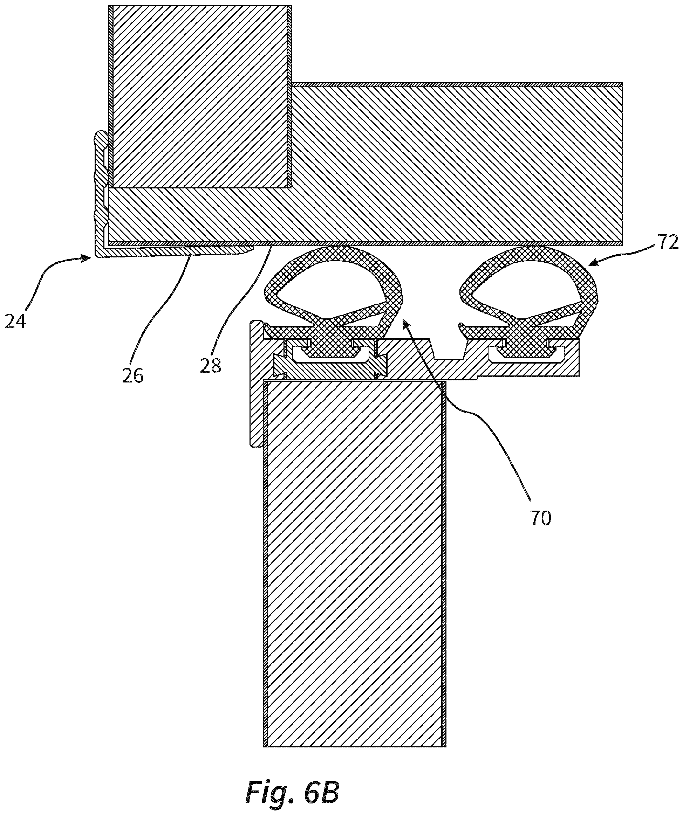

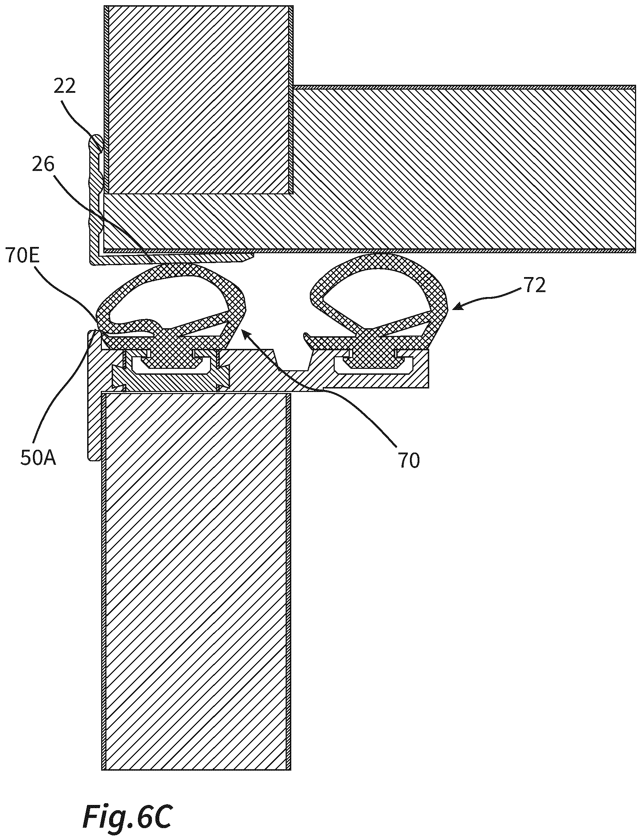

Die Dichtungen 70, 72 liegen mit ihren Schlauchabschnitten 70A, 72A im Betrieb an der Gegenfläche 24 an und dichten hier ab, wie die Fig. 6B und 6C zeigen. Hierbei werden die Schlauchabschnitte 70A, 72A elastisch in eine flachere Konfiguration zusammengedrückt und durch die elastische Rückstellkraft so stark gegen die Gegenfläche 24 gedrückt, dass Flüssigkeit auch unter widrigen Bedingungen nicht beide Dichtungen 70, 72 überwinden kann.

Wie insbesondere in Fig. 6A gut zu erkennen ist, weist das den Dichtungsträger 50 bildende Profil im Querschnitt verschiedene Teilbereiche 52A, 52B, 52C auf. Die Teilbereiche 52A, 52C des Querschnitts bestehen aus Metall, insbesondere aus Aluminium. Der dazwischen liegende Teilbereich 52B besteht aus Kunststoff, beispielsweise aus ABS, PC, PA oder PP.

Die metallischen Teilbereiche 52A, 52C sind hinsichtlich ihrer Ästhetik sowie auch der Witterungsbeständigkeit zweckmäßig. Der Teilbereich 52B aus Kunststoff stellt primär eine thermische Isolation bereit. Der Teilbereich 52B ist so angeordnet, dass in einer üblichen Testsituation mit -5°C in einer äußeren Umgebung und 20°C innerhalb des Fahrzeugs die 10°C-Isotherme in etwa in diesem Bereich den Dichtungsträger 50 kreuzt. Dies führt dazu, dass der Teilbereich 52C üblicherweise nicht kälter als 10°C wird und somit hier keine nennenswerte Kondensation zu erwarten ist.

Die Verbindung der Teilbereiche 52A, 52B, 52C ist vorzugsweise durch Formschluss hergestellt. Zu diesem Zweck sind vorliegend die Kontaktflächen der Teilbereiche mit einer Schwalbenschwanzstruktur 56 versehen. Diese formschlüssige Verbindung ist insbesondere zweckmäßig, wenn der Dichtungsträger in den Eckbereichen gebogen ist. Der Formschluss verhindert, dass dies zu einer Trennung der Teilbereiche 52A, 52B, 52C führt. Zusätzlich sind die Teilbereiche miteinander verklebt. Hierfür ist eine Klebeschicht 58 vorgesehen, wobei es sich vorzugsweise um einen mittels Wärme aktivierten Klebstoff handelt, dessen Aktivierung nach einer Biegeverformung stattfindet, um beim Biegen entstandene Spalten zwischen den Teilbereichen 52A, 52B, 52C zu füllen.

Fig. 6B und 6C verdeutlichen die Dichtungssituation der Dichteinrichtung 44 mit ihren beiden Dichtungen 70, 72. Fig. 6B zeigt den Zustand, wenn der Slide-Out-Kasten 12 sich nicht in seiner Stau-Endlage befindet. In einem solchen Zustand einschließlich dem Zustand bei vollständig ausgefahrenem Slide-Out-Kasten liegen die Dichtungen 70, 72 in einem ebenen Bereich der Seitenwandungen 14, der Bodenwandung 16 oder der Dachwandung 18 an und werden hierdurch komprimiert, sodass sie die gewünschte Dichtwirkung entfalten. Die bei der Komprimierung sich einstellende Verformung findet primär in einem Federsegment 70D der Dichtung 70 statt.

Wird der Slide-Out-Kasten 12 vollständig eingefahren und erreicht somit die Stau-Endlage, so stellt sich der Zustand der Fig. 6C ein. In diesem Zustand fährt die erste Dichtung 70 auf eine erhabene Dichtfläche 26 auf, die vom Gegenprofil 22 gebildet wird. Die Kompression der ersten Dichtung 70 sowie hierdurch die auf die Gegenfläche 24 wirkende Dichtkraft erhöht sich nochmals. Zusätzlich wird durch die Verformung der Dichtung 70 ein an das Federsegment 70D angrenzender Zusatzdichtbereich 70E gegen eine Anlagefläche 50A des Dichtungsträgers 50 gedrückt, sodass im Zustand der Fig. 6C eine sehr wirksame vollständige Abdichtung erzielt wird.

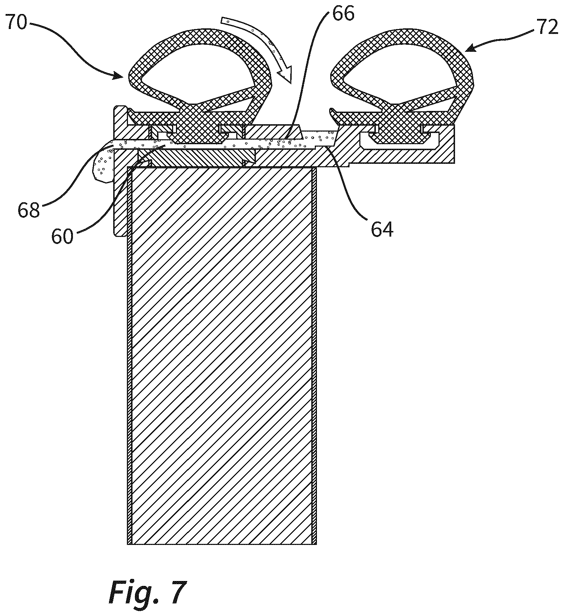

Fig. 7 verdeutlicht die Abführung von eindringendem Wasser. Es ist in der Praxis nicht zu gewährleisten, dass eine Dichtung allein, vorliegend die erste Dichtung 70, vollständig den Eintritt von Flüssigkeit von außen unterbindet. Wie Fig. 7 zeigt, sammelt sich diese Flüssigkeit jedoch jenseits der ersten Dichtung 70 im Drainagekanal 64. Von dort erstreckt sich ein weiterer Kanal 66 durch die Haltenut 60 des Dichtungsträgers 50 hindurch bis zur Drainageöffnung 68 an der Außenseite des Fahrzeugs 100, 102, wo die Flüssigkeit dann entweichen kann.

## Patentansprüche

1. Dichtungssystem (40) für eine Slide-Out-Anordnung (10) eines Wohnmobils (100) oder Caravan-Anhängers (102) zur Abdichtung eines in einer Slide-Out-Aussparung zwischen einer eingefahrenen Stau-Endlage und einer ausgefahrenen Nutz-Endlage verfahrbaren Slide-Out-Kastens (12) mit den folgenden Merkmalen:
a. das Dichtungssystem (40) umfasst eine chassisseitige und eine Slide-Out-Aussparung umgebende Dichteinrichtung (44) zur chassisseitigen Anbringung am Fahrzeug, die mit Seitenwandungen (14) sowie einer Bodenwandung (16) und einer Dachwandung (18) des Slide-Out-Kastens (12) als Gegenfläche abdichtet, und
b. die chassisseitige Dichteinrichtung (44) weist einen vorzugsweise umlaufend an einer Slide-Out-Aussparungdes Chassis vorgesehenen Dichtungsträger (50) auf, und
c. der Dichtungsträger (50) trägt zwei hintereinanderliegende und die Slide-Out-Aussparung umgebende elastische Dichtungen (70, 72), eine erste außenliegende Dichtung (70) und eine zweite innenliegende Dichtung (72), die hintereinander versetzt an den Wandungen (14, 16, 18) des Slide-Out-Kastens (12) anliegen, und
c. der Dichtungsträger (50) weist zwischen derersten Dichtung (70) und derzweiten Dichtung (72) einen Drainagekanal (64) auf, und
d. der Drainagekanal (64) ist mit mindestens einer Drainageöffnung (68) an einer Außenseite des Chassis verbunden.

2. Dichtungssystem (40) nach Anspruch 1 mit dem folgenden weiteren Merkmal:
a. die zwei Dichtungen (70, 72) sind jeweils als Schlauchdichtungen ausgebildet, wobei die Schlauchdichtungen im Querschnitt einen umfänglich geschlossenen Schlauchabschnitt (70A, 72A) aufweist, der einen lichten Teilquerschnitt (70C, 72C) umgeben,
vorzugsweise mit dem folgenden zusätzlichen Merkmal:
b. mindestens eine der Schlauchdichtung ist umfänglich nicht vollständig geschlossen und verfügt über mindestens eine Öffnung, durch die der lichte Teilquerschnitt mit einer umgebenden Atmosphäre in Verbindung steht, wobei die Schlauchdichtung (70, 72) vorzugsweise an ihren Enden (73, 75) offen ist.

3. Dichtungssystem (40) nach Anspruch 2 mit dem folgenden weiteren Merkmal:
a. mindestens die erste Dichtung (70) weist einen asymmetrischen Querschnitt auf, mittels dessen der Eintritt von Wasser stärker behindert wird als der Austritt von Wasser,
vorzugsweise mit dem folgenden zusätzlichen Merkmal:
b. mindestens die erste Dichtung (70) weist in ihrem Querschnitt einen seitlichen Zusatzdichtbereich (70E) im Bereich des Schlauchabschnitts (70A) auf, der bei Kraftbeaufschlagung durch eine Gegenfläche (24) am Slide-Out-Kasten gegen eine Anlagefläche (50A) des Dichtungsträgers (50) gedrückt wird, wobei die Gegenfläche (24) vorzugsweise nur in der Stau-Endlage den Zusatzdichtbereich (70E) gegen die Anlagefläche (50A) drückt.

4. Dichtungssystem (40) nach einem der vorstehenden Ansprüche mit den folgenden weiteren Merkmalen:
a. der Dichtungsträger (50) ist als Verbundprofil aus Kunststoff und Metall ausgebildet, und
b. der Querschnitt des Verbund profils weist mindestens einen Teilbereich (52C) aus Kunststoff und mindestens einen Teilbereich (52A, 52B) aus Metall auf, insbesondere aus Aluminium,
insbesondere mit mindestens einem der folgenden zusätzlichen Merkmale:
c. die Teilbereiche (52A, 52B, 52C) aus Metall und Kunststoff sind formschlüssig miteinander verbunden, insbesondere durch eine Schwalbenschwanz-Struktur (56), und/oder
d. die Teilbereiche (52A, 52B, 52C) sind miteinander verklebt, insbesondere durch einen über Wärme aktivierten Klebstoff (58).

5. Dichtungssystem (40) nach einem der vorstehenden Ansprüche mit mindestens einem der folgenden weiteren Merkmale:
a. mindestens eine der Dichtungen (70, 72) umfasst mehrere Abschnitte, die in Eckbereichen vorzugsweise stoffschlüssig verbunden sind, oder
b. mindestens eine der Dichtungen (70, 72) umfasst einen einstückigen Profilabschnitt, der in mindestens einen Eckbereich innenseitig eingeschnitten und um mindestens 70° eingeknickt ist.

6. Dichtungssystem (40) nach einem der Ansprüche 1 bis 4 mit den folgenden weiteren Merkmalen:
a. die Seitenwandungen (14) gehen in einem ausgerundeten Bereich in die Dachwandung (18) und/oder die Bodenwandung (16) über, und
b. der Dichtungsträger (50) und die Dichtungen (70, 72) verlaufen entsprechend dem ausgerundeten Bereich des Slide-Out-Kastens (12) in Form eines Viertelkreises,
vorzugsweise mit mindestens einem der folgenden zusätzlichen Merkmale:
c. der Dichtungsträger (50) ist im Eckbereich gebogen, und/oder
d. mindestens eine der Dichtungen (70, 72) ist als einstückiges umlaufendes Dichtungsprofil ausgebildet.

7. Dichtungssystem (40) nach einem der vorstehenden Ansprüche mit den folgenden weiteren Merkmalen:
a. das Dichtungssystem (40) umfasst eine erhabene Dichtfläche (26) an einem distalen Ende der Seitenwandungen (14), der Bodenwandung (16) und/oder der Dachwandung (18) des Slide-Out-Kastens (12), und
b. die erhabene Dichtfläche (26) steht erhöht gegenüber einem angrenzenden Bereich (28) der Wandungen (14, 16, 18), und
c. in der Stau-Endlage läuft mindestens eine elastische Dichtung (70, 72) auf die erhabene Dichtfläche (26) auf und wird dort stärker komprimiert als in der Nutz-Endlage.
vorzugsweise mit mindestens einem der folgenden zusätzlichen Merkmale:
e. die erhabene Dichtfläche (26) wird durch ein vorzugsweise metallisches Gegenprofil (22) am Slide-Out-Kasten (12) gebildet, und/oder
f. die erhabene Dichtfläche (26) ist mindestens um 1 mm gegenüber den sich proximal anschließenden Bereichen (28) der Wandungen (14, 16, 18) erhaben, vorzugsweise um mindestens 1,5 mm.

8. Dichtungssystem (40) nach einem der vorstehenden Ansprüche mit dem folgenden weiteren Merkmal:
a. die mindestens eine Drainageöffnung (68) ist als Austrittsöffnung im Dichtungsträger (50) ausgebildet, wobei vorzugsweise mehrere Drainageöffnungen (68) über einen unteren horizontalen Teilabschnitt des Dichtungsträgers (50) verteilt vorgesehen sind.

9. Dichtungssystem (40) nach einem der vorstehenden Ansprüche mit den folgenden weiteren Merkmalen:
a. die erste Dichtung (70) weist einen Halteabschnitt (70B) auf, der in einer Haltenut (60) am Dichtungsträger (50) befestigt ist, und
b. eine Fluidverbindung zwischen dem Drainagekanal (64) und der Drainageöffnung (68) verläuft durch die Haltenut (60) der ersten Dichtung (70).

10. Dichtungssystem (40) nach einem der vorstehenden Ansprüche mit dem folgenden weiteren Merkmal:
a. der Dichtungsträger (50) ist durch ein einteiliges Profil gebildet oder aus zwei oder mehr Profilabschnitten zusammengesetzt,
vorzugsweise mit mindestens einem der folgenden zusätzlichen Merkmale:
b. die Enden (53) des einteiligen Dichtungsträgers (50) oder die Enden der mehreren den Dichtungsträger bildenden Profilabschnitte sind miteinander verbunden, insbesondere mittels mindestens eines Profilverbinders, wobei vorzugsweise der Profilverbinder insbesondere in einer Haltenut (60) zur Aufnahme der ersten Dichtungangeordnet ist, oder mittels einer Schweißverbindung, vorzugsweise einer Laserschweißverbindung, und/oder
c. die Enden (53) des einteiligen Dichtungsträgers (50) oder die Enden der mehreren den Dichtungsträger bildenden Profilabschnitte sind in einem vertikalen Teilabschnitt der Slide-Out-Aussparung angeordnet.

11. Dichtungssystem (40) nach einem der vorstehenden Ansprüche mit dem folgenden weiteren Merkmal:
a. die Dichteinrichtung (44) ist zum Einbau von außen in eine Fahrzeugaußenwand (104) eines Fahrzeugs ausgebildet und weist keinerlei das Einschieben der Dichteinrichtung (44) von außen blockierende Abschnitte auf, wobei vorzugsweise der Dichtungsträger (50) einen nach außen auskragenden Flansch zur Anlage an einer Außenseite der Fahrzeugaußenwand (104) aufweist.

12. Dichtungssystem (40) nach einem der vorstehenden Ansprüche mit mindestens einem der folgenden zusätzlichen Merkmale:
a. sowohl Enden (53) des Dichtungsträgers (50) als auch Enden (71, 73) der Dichtungen (70, 72) sind im Bereich mindestens einer Stoßstelle voneinander getrennt, wobei vorzugsweise die Stoßstelle des Dichtungsträger (50) im Bereich der Bodenwandung (16) vorgesehen ist, und/oder
b. der Dichtungsträger (50) ist als reines Kunststoffprofil oder als reines Metallprofil ausgebildet, insbesondere als Aluminiumprofil, und/oder
c. die Dichtungen (70, 72) bestehen aus einem UV-beständigen Elastomer, insbesondere EPDM oder NBR.

13. Slide-Out-Anordnung (10) mit den folgenden Merkmalen:
a. die Slide-Out-Anordnung (10) umfasst einen Slide-Out-Kasten (12) zur Verwendung an einem Wohnmobil (100) oder Caravan-Anhänger (102), der zwischen einer eingefahrenen Stau-Endlage und einer ausgefahrenen Nutz-Endlage verfahrbar ist, und
b. die Slide-Out-Anordnung (10) umfasst ein Dichtungssystem (40) zur Abdichtung an einer Außenseite des Slide-Out-Kastens (12),
**gekennzeichnet durch** das folgende weitere Merkmal:
c. das Dichtungssystem (40) ist nach einem der vorstehenden Ansprüche ausgebildet.

14. Slide-Out-Anordnung (10) nach Anspruch 13 mit mindestens einem der folgenden weiteren Merkmale:
a. die Slide-Out-Anordnung (10) verfügt über ein Verfahrsystem (30), welches derart angeordnet ist, dass keine hierzu gehörenden Komponenten auf der Außenseite der Wandungen (14, 16, 18) vorgesehen sind, und/oder
b. die Slide-Out-Anordnung (10) verfügt über mindestens einen elektrischen Antriebsmotor (32), der als bürstenloser Gleichstrommotor ausgebildet ist.

15. Slide-Out-Anordnung (10) nach Anspruch 13 oder 14 mit den folgenden weiteren Merkmalen:
a. der Slide-Out-Kasten (12) weist eine Dachwandung (18), zwei Seitenwandungen (14) und eine Bodenwandung (16) auf, deren Außenseite einen Teil einer Außenseite des Slide-Out-Kastens (12) bilden, und
b. mindestens die Dachwandung (18) und die Seitenwandungen (14) bestehen aus einem durchgehenden Plattenmaterial, welches in den Übergangsbereichen von der Dachwandung (18) zu den Seitenwandungen gebogen ist,
vorzugsweise mit mindestens einem der folgenden zusätzlichen Merkmale:
c. die Dachwandung (18), die Seitenwandungen (14) und die Bodenwandung (16) bestehen aus dem durchgehenden Plattenmaterial, welches in den Übergangsbereichen von der Dachwandung und von der Bodenwandung zu den Seitenwandungen umgebogen ist, wobei vorzugsweise eine Verbindungsstelle im Bereich der Bodenwandung vorgesehen ist, und/oder
d. das Plattenmaterial ist ein mehrlagiges Verbundmaterial, insbesondere mit zwei metallischen Schichten, insbesondere Aluminiumschichten, zwischen denen eine Zwischenschicht vorgesehen ist, und/oder mit mindestens einer Schicht aus GFK oder CFK und/oder mindestens einer Schicht aus Kunststoff.

16. Fahrzeug (100, 102), insbesondere Wohnmobil (100) oder Caravan-Anhänger (102), mit einer Slide-Out-Anordnung (10) mit den folgenden Merkmalen:
a. das Fahrzeug (100, 102) weist einen Fahrzeuginnenraum auf, und
b. das Fahrzeug (100, 102) weist eine Slide-Out-Anordnung (10) mit einem Slide-Out-Kasten (12) auf, der verlagerbar ist zwischen einer Stau-Endlage, in der eine Außenseite des Slide-Out-Kastens im Wesentlichen mit der umgebenden Seitenwandung fluchtet, und einer Nutz-Endlage, in der der Slide-Out-Kasten zur Vergrößerung des Fahrzeuginnenraums nach außen ausgefahren ist,
**gekennzeichnet durch** das folgende zusätzliche Merkmal:
c. die Slide-Out-Anordnung (10) ist nach einem der Ansprüche 13 bis 15 ausgebildet und/oder verfügt über ein Dichtungssystem (40) nach einem der Ansprüche 1 bis 12.
